# EUROPÄISCHE PATENTSCHRIFT

(11) **EP 1 763 425 B1**
(45) Veröffentlichungstag und Bekanntmachung des Hinweises auf die Patenterteilung: **06.02.2008**
(21) Anmeldenummer: 05735968.9
(22) Anmeldetag: 25.02.2005
(51) Int. Cl.: B29C 43/24, B29C 43/52, B29C 43/58, B30B 3/00

(54) **VERFAHREN ZUM BETREIBEN EINES VIERWALZENGLÄTTWERKES**
METHOD FOR OPERATING A FOUR-ROLL CALENDAR MACHINE
PROCEDE POUR FAIRE FONCTIONNER UNE MACHINE DE POLISSAGE A QUATRE CYLINDRES

(30) Priorität: 08.07.2004 DE 102004033235
(43) Veröffentlichungstag der Anmeldung: 21.03.2007
(73) Patentinhaber: Breyer GmbH Maschinenfabrik, 78224 Singen (DE)
(72) Erfinder: LUCAS, Bernhard, 78224 Singen-Bohlingen (DE); RIEDLE, Reiner, 78315 Radolfzell (DE); ZIEGLER, Uwe, 78267 Aach (DE); BRÜTSCH, Martin, 78262 Gailingen (DE)
(74) Vertreter: Weiss, Peter
(86) Internationale Anmeldenummer: PCT/EP2005/002031
(87) Internationale Veröffentlichungsnummer: WO 2006/005379

(56) Entgegenhaltungen:
- EP-A- 0 373 005
- DE-A1- 2 743 844
- DE-A1- 19 544 988
- US-A- 3 182 587
- US-A- 4 171 942
- US-A- 5 542 836

## Beschreibung

Die vorliegende Erfindung betrifft ein Verfahren zum Betreiben eines Vierwalzenglättwerkes, bei welchem eine Kunststoffschmelze aus einer Extrusionsdüse zwischen einer ersten und einer zweiten Walze und dann zwischen einer dritten und einer vierten Walze vergleichmässigt wird sowie ein nach dem Verfahren arbeitendes Vierwalzenglättwerk.

Ein herkömmliches Vierwalzenglättwerk ist bspw. aus der DE 195 44 988 bekannt und beschrieben. Auf diesen Stand der Technik wird ausdrücklich verwiesen. Dieser Stand der Technik soll auch Grundlage dieser Anmeldung sein.

Bei herkömmlichen Vierwalzenglättwerken ist nachteilig, dass die Verweilzeit der Kunststoffschmelze innerhalb des Vierwalzenglättwerkes zu gering ist.

Da die Kunststoffschmelze ein guter Isolator ist, erfolgt eine . Wärmeabfuhr, der Kunststoffschmelze im Vierwalzenglättwerk nicht hinreichend schnell, so dass die Produktionsgeschwindigkeit begrenzt ist.

Im Vierwalzenglättwerk wird die Kunststoffschmelze auf eine gewünschte Spaltbreite reduziert, oberflächenbehandelt, abgekühlt und einer weiteren Bearbeitung, wie bspw. einer Rollbahn übergeben.

Dabei ist ferner nachteilig, dass sich bei herkömmlichen Vierwalzenglättwerken diese sich nur schwer reinigen lassen, bei Crash, Walzen häufig beschädigt werden, was unerwünscht ist, und zudem ein Austausch einzelner Walzen des Vierwalzenglättwerkes nur sehr arbeits- und kostenaufwendig möglich ist.

Die DE 27 43 844 offenbart ein Verfahren zur Steuerung des Profils des letzten Walzen-Press-Spaltes bei einem Kalander. Dort ist die letzte Walze und die erste Walze des Kalanders in vertikaler Richtung und die dazwischenliegende Walze eigenständig in horizontaler Richtung bewegbar.

Der vorliegenden Erfindung liegt die Aufgabe zugrunde ein Verfahren sowie.ein Vierwalzenglättwerk zu schaffen, welche die genannten Nachteile beseitigen und welche die Produktionsgeschwindigkeit erhöhen, eine Wärmeabfuhr verbessern, ein automatisches Anfahren ermöglichen und bei Crash automatisiert ein Beschädigen der Walzen verhindert wird.

Zur Lösung dieser Aufgabe führen die Merkmale der Kennzeichen der Patentansprüche 1 und 16.

Bei der vorliegenden Erfindung hat sich als besonders vorteilhaft erwiesen, die dritte und die vierte Walze des Vierwalzenglättwerkes über ein Drehschild gemeinsam über eine aussermittige Drehachse zu verschwenken.

Dabei ist die vierte Walze gegenüber der dritten Walze anhand des Drehschildes bewegbar und lässt unabhängig von der Bewegung des Drehschildes eine Einstellung eines Spaltes zwischen dritter und vierter Walze zu.

Durch das Verschwenken des Drehschildes lässt sich insbesondere ein Spalt zwischen einer zweiten Walze und der dritten Walze einstellen, wobei ein Spalt zwischen dritter und vierten Walze davon unberührt und konstant bleibt.

Insbesondere hat sich ferner als vorteilhaft bei der vorliegenden Erfindung erwiesen, dass durch das Schwenken des Drehschildes und damit durch Verschwenken der dritten Walze, die unterhalb der beiden ersten Walzen angeordnet ist, ein Anfahrprozess erleichtert ist, in dem bspw. die dritte Walze vorzugsweise mittig zwischen den beiden oberen Walzen verfahren bzw. verschwenkt wird. Hierdurch lässt sich die Kunststoffschmelze durch die beiden ersten Walzen mittig auf die dritte Walze aufbringen, so dass ein manuelles Umschlingen der dritten Walze mit der Kunststoffschmelze beim Anfahren des Produktionsprozesses hierdurch entfallen kann. Dieser Anfahrprozess ist hierdurch wesentlich erleichtert.

Nach dem Umschlingen der dritten Walze mit der Kunststoffschmelze lässt sich durch Öffnen des Spaltes zwischen dritter und vierter Walze durch Verfahren einer der vierten Walze, die Kunststoffschmelze die vierte Walze umschlingen und wird dann einer Rollbahn zur weiteren Verarbeitung übergeben.

Während dieses Prozesses wird die Kunststoffschmelze in den jeweiligen Spalten gleichmässig abgekühlt und erhält hierdurch eine gewünschte Oberfläche.

Hierdurch ist es ebenfalls möglich alle vier Walzen im Betrieb zu reinigen, da alle vier Walzen frei zugänglich sind.

Ferner hat sich als vorteilhaft erwiesen, bei der vorliegenden Erfindung, dass die Walzen alle von gleicher Bauart ausgebildet sind und untereinander austauschbar sind. Alle Walzen sind von gleichem Durchmesser, haben den gleichen Antrieb, d. h. die gleiche Servo- und Getriebeeinheiten.

Jede Walze kann durch jede Walze ausgetauscht werden. Dies gewährleistet, dass nur eine einzige Walze mit einem einzigen Antriebssystem als Ersatzteil bereit gehalten werden muss, um entweder die erste, zweite, dritte oder vierte Walze bei Beschädigung auszutauschen. Hierdurch lassen sich ebenfalls die Lagerhaltungskosten erheblich reduzieren.

Insgesamt ist bei der vorliegenden Erfindung ein Verfahren sowie ein Vierwalzenglättwerk geschaffen, mit welchem es möglich ist, wesentlich höhere Fertigungs- bzw. Extrusionsgeschwindigkeiten zu fahren. Die Temperaturabfuhr der Kunststoffschmelze ist ebenfalls verbessert, hierdurch lassen sich ebenfalls höhere Durchsätze bzw. Fertigungs- und Extrusionsgeschwindigkeiten fahren.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt
in Figur 1 eine schematisch dargestellte Draufsicht auf ein Vierwalzenglättwerk zum Bearbeiten einer aus einer Extrusionsdüse ausgebrachten Kunststoffschmelze;
Figur 2 eine schematisch dargestellte Seitenansicht durch das Vierwalzenglättwerk in einem Betriebszustand;
Figur 3 eine schematisch dargestellte Seitenansicht des Vierwalzenglättwerkes gemäss Figur 2 in einer Anfahrposition.

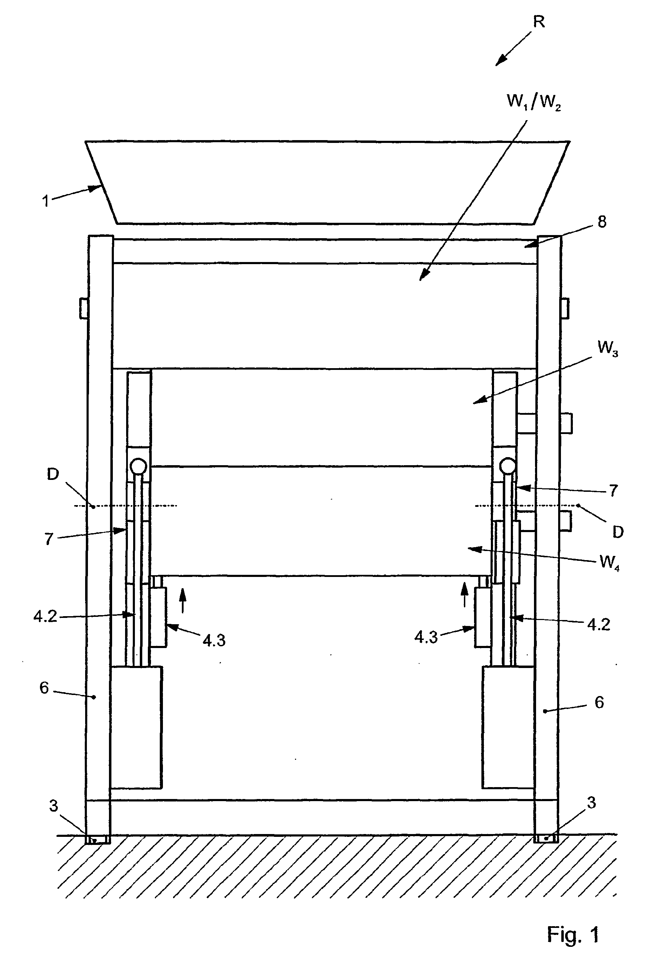

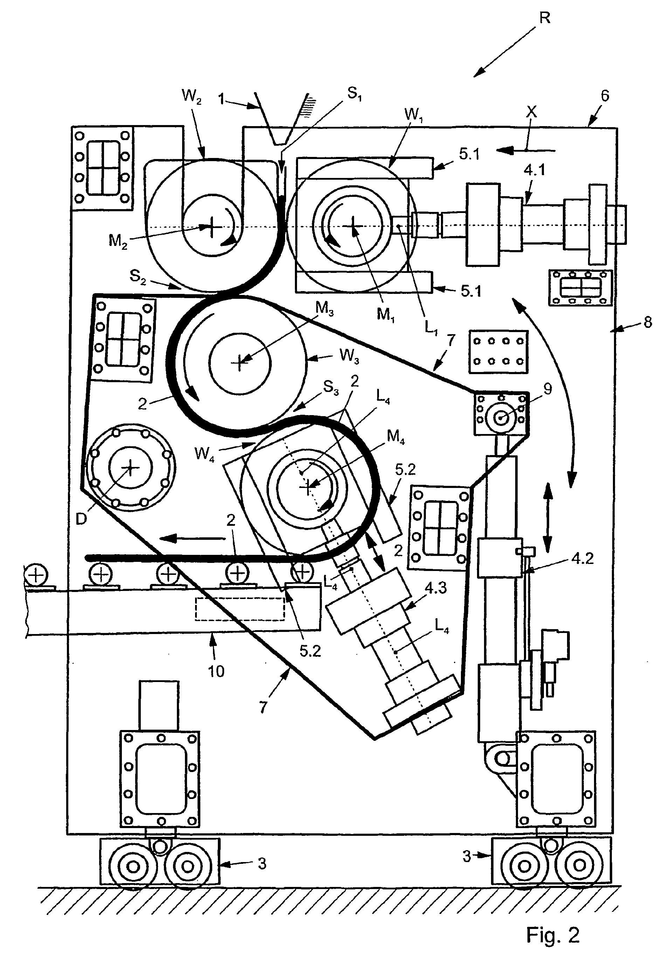

Gemäss den Figuren 1 und 2 wird einem Vierwalzenglättwerk R mittels einer hier nur angedeuteten, als Breitschlitzdüse ausgebildeten, Extrusionsdüse 1 eine Kunststoffschmelze 2 zugeführt. Dabei ist die Extrusionsdüse 1 ortsfest, wobei das Vierwalzenglättwerk R über hier angedeutete Rollenantriebe 3 gegenüber einem Untergrund und in dargestellter X-Richtung hin und her verfahrbar ist.

Im Wesentlichen ist das Vierwalzenglättwerk R aus zueinander beabstandeten parallelen Seitenwänden 6 gebildet. Zwischen den Seitenwänden 6 sind die Walzen W₁ bis W₄ rotativ gelagert und dort über entsprechende hier nicht näher dargestellte Antriebselemente, bestehend aus Getriebeelemente und Servomotoren aktiv angetrieben.

Zudem ist jede Walze W₁ bis W₄ temperierbar, d. h. erwärmbar oder abkühlbar.

Die Walzen W₁ und W₂ sind nebeneinander angeordnet. Dort führt eine Wirklinie L₁ eines Linearantriebes L₁ oder Walze W₁ durch die eine Mittelachse M₁ der Walze W₁ und der beanchbarten Walze W₂.

Die Linearführungen 5.1 sind vorzugsweise jeweils in den Seitenwänden 6 vorgesehen und führen linear die Walze W₁ bewegbar gegenüber der Walze W₂ entlang der Wirklinie L₁ zur Einstellung und Veränderung eines Spaltes S₁ auch im Betrieb. Jede Walze W₁ bis W₄ ist aktiv antreibbar bzw. angetrieben.

Als besonders vorteilhaft hat sich bei der vorliegenden Erfindung erwiesen, die Walzen W₃ und W₄ nicht in den Seitenwänden 6 zu lagern, sondern innerhalb parallel zueinander beabstandeter Drehschilder 7, welche wie in Doppelpfeilrichtung angedeutet, um eine Drehachse D mittels eines Linearantriebes 4.2 hin und her bewegbar bzw. verschwenkbar sind.

Der Linearantrieb 4.2 ist an einer Seitenwand 6 oder am Gehäuse 8 des Vierwalzenglättwerkes R abgestützt.

Bevorzugt liegt ein Angriffspunkt 9 des Linearantriebes 4.2 weit ausserhalb der Drehachse D, um einen grossen Hebelarm zu ermöglichen. Zwischen dem Angriffspunkt 9 und der Drehachse D sind übereinander, zueinander leicht versetzt die Walzen W₃ und W₄ angeordnet.

Die Walze W₃ ist lediglich im Drehschild 7 rotativ und angetrieben gelagert.

Die Walze W₄ ist unterhalb der Walze W₃ angeordnet, wobei deren Mittelachse M₄ zur Mittelachse M₃ der Walze W₃ leicht versetzt ist.

Die Walze W₄ ist über eine weitere im Drehschild 7 vorgesehene Linearführung 5.2 linear über einen Linearantrieb 4.3 hin und her bewegbar.

Dabei ist die Linearführung 5.2 bzw. eine Wirklinie L₄ auf in etwa der Mittelachse M₃ der Walze W₃ ausgerichtet.

Durch das Betätigen des Linearantriebes 4.3 lässt sich die Walze W₄ gegen die Walze W₃ bewegen, so dass sich hierüber ein Spalt S₃ einstellen und verändern lässt.

Wichtig ist bei der vorliegenden Erfindung, dass unabhängig von der Einstellung des Spaltes S₃ sich der Spalt S₂ durch Verschwenken des Drehschildes 7 zwischen den Walzen W₂ und W₃ einstellen bzw. im Betrieb verändern lässt.

Eine Bewegung bzw. eine Einstellung aller Spalte S₁, S₂ und S₃ ist daher entkoppelt und eigenständig auch im Betrieb möglich.

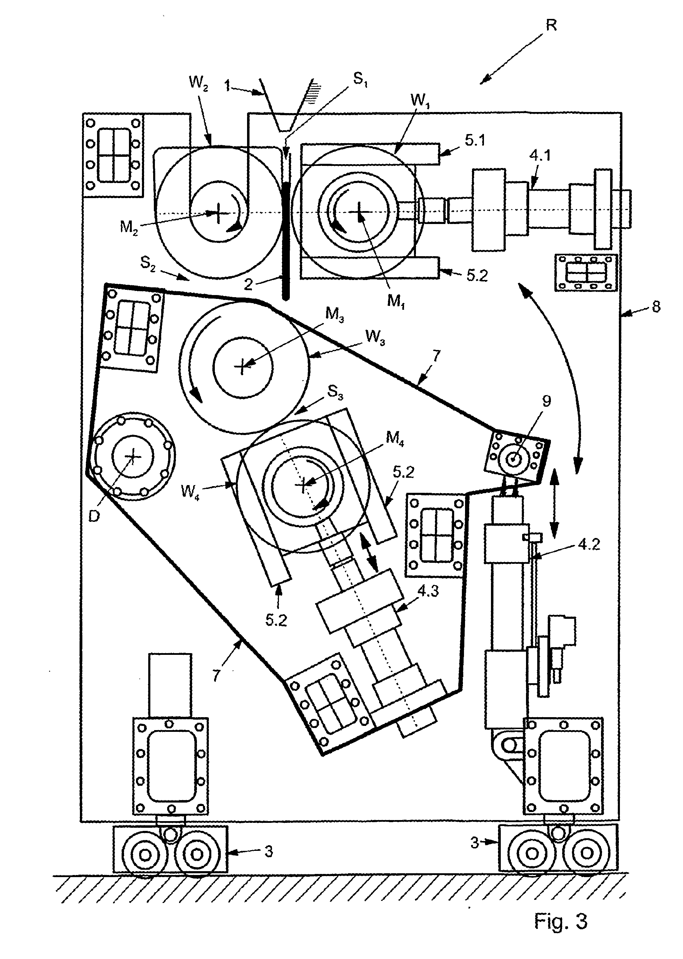

Entscheidend ist jedoch bei der vorliegenden Erfindung, insbesondere für den Anfahrprozess, wie es bspw. im Ausführungsbeispiel gemäss Figur 3 aufgezeigt ist, dass die Kunststoffschmelze 2 beim Anfahren zwischen den Walzen W₁ und W₂ auf die Walze W₃ unmittelbar gelangt, wenn diese mittels des Drehschildes 7 um die Drehachse D in eine etwa mittige Position zwischen den beiden Walzen W₁ und W₂ verfahren wird.

Dann kann beim entsprechenden Verdrehen der Walze W₃ die Kunststoffschmelze 2 automatisch ohne manuelle Hilfe aufgenommen werden, und umschlingt die Walze W₃.

Nach dem Aufnehmen der Schmelze 3 durch die Walze W₃ ist es denkbar, dass das Drehschild D noch weiter absinkt, um die Kunststoffschmelze 2 der Walze W₄ zu übergeben.

Gelangt die Kunststoffschmelze 2 zwischen die Walzen W₃ und W₄ und umschlingt diese, so wird dann, wie es in Figur 2 dargestellt ist, die Kunststoffschmelze 2 einer hier nur angedeuteten Rollbahn 10 zur weiteren Verarbeitung übergeben.

Auch bei Notaus-Funktion, bei Wartung und Reinigungsarbeiten, lässt sich durch Verschwenken des Drehschildes 7 und damit der Walzen W₃ und W₄ ein Reinigen und Austauschen von Walzenantrieben etc. leicht durchführen.

Hierzu ist es lediglich erforderlich, dass der Linearantrieb 4.3 die Walze W₄ zurückfährt und vergrössert hierdurch den Spalt S₃ zwischen Walze W₄ und W₃.

Durch gleichzeitiges Verschwenken des Drehschildes 7 um die Drehachse D lässt sich ebenso der Spalt S₂ zwischen Walze W₂ und Walze W₃ öffnen, so dass auch hier Wartungs- und Reinigungsarbeiten möglich sind, ohne das Vierwalzenglättwerk R zu demontieren bzw. ohne einzelne Walzen auszubauen.

Ferner hat sich als besonders vorteilhaft erwiesen, dass die Linearantriebe 4.1, 4.2 und 4.3 jeweils in der Mitte der Lagerungen bzw. in der Lagermitte der Walzen W₁, W₂ bzw. Mitte der Lagerung der Drehachse D angreifen, um eine Biegung der Walze W₁ bis W₄ zu verhindern bzw. eine Biegung auszuschliessen. Dies soll ebenfalls im Rahmen der vorliegenden Erfindung liegen.

Ferner hat sich als besonders vorteilhaft bei der vorliegenden Erfindung erwiesen, dass alle Walzen W₁ bis W₄ von gleicher Grösse und gleicher Bauart gebildet sind und mit entsprechenden gleichen Antrieben, Servomotoren und/oder Getriebeelementen versehen sind. Hierdurch lassen sich die einzelnen Walzen W₁ bis W₄ universell einsetzen bzw. auch untereinander austauschen.

Somit ist lediglich erforderlich, dass bspw. lediglich eine Walze W₁ bis W₄ mit Getriebeelementen, Antriebselementen od. dgl. bereit gehalten werden muss, und ggf. dann als Ersatz der Walze W₁, W₂, W₃ oder W₄ dienen kann. Dies lässt insbesondere eine kostengünstige Ersatzteillagerhaltung zu.

### Positionszahlenliste

| | | | | | |
|---|---|---|---|---|---|
| 1 | Extrusionsdüse | 34 | | | |
| 2 | Kunststoffschmelze | 35 | | W₁ | Walze |
| 3 | Rollenantrieb | 36 | | W₂ | Walze |
| 4 | Linearantrieb | 37 | | W₃ | Walze |
| 5 | Linearöffnung | 38 | | W₄ | Walze |
| 6 | Seitenwand | 39 | | | |
| 7 | Drehschild | 40 | | R | Vierwalzenglättwerk |
| 8 | Gehäuse | 41 | | | |
| 9 | Angriffspunkt | 42 | | X | Richtung |
| 10 | Rollbahn | 43 | | Y | Richtung |
| 11 | | 44 | | | |
| 12 | | 45 | | D | Drehachse |
| 13 | | 46 | | | |
| 14 | | 47 | | S₁ | Spalt |
| 15 | | 48 | | S₂ | Spalt |
| 16 | | 49 | | S₃ | Spalt |
| 17 | | 50 | | | |
| 18 | | 51 | | M₁ | Mittelachse |
| 19 | | 52 | | M₂ | Mittelachse |
| 20 | | 53 | | M₃ | Mittelachse |
| 21 | | 54 | | M₄ | Mittelachse |
| 22 | | 55 | | | |
| 23 | | 56 | | L₁ | Wirklinie |
| 24 | | 57 | | L₂ | Wirklinie |
| 25 | | 58 | | L₃ | Wirklinie |
| 26 | | 59 | | L₄ | Wirklinie |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Betreiben eines Vierwalzenglättwerkes (R), brei welchem eine Kunststoffschmelze (2) aus einer Extrusionsdüse (1) zwischen einer ersten und einer zweiten Walze (W₁, W₂) und dann zwischen einer dritten und einer vierten Walze (W₃, W₄) vergleichmässigt wird,
**dadurch gekennzeichnet,**
**dass** eine Lage der dritten Walze (W₃) zum Einstellen unterschiedlicher Betriebszustände, auch im Betrieb gegenüber den Walzen (W₁ und/oder W₂) verändert wird, wobei die Walzen (W₃ und W₄) über ein Drehschild (7) um eine exzentrische Drehachse (D) gemeinsam bewegt werden.

2. Verfahren nach Anspruch 1, **dadurch gekennzeichnet, dass** für einen Anfahrprozess die dritte Walze (W₃) in etwa mittig unterhalb der beiden ersten Walzen (W₁ und W₂) verfahren wird, um die Kunststoffschmelze (2) auf die dritte Walze (W₃) zu übergeben.

3. Verfahren nach Anspruch 1 oder 2, **dadurch gekennzeichnet, dass** die erste Walze (W₁) über einen Antrieb in einer X-Richtung gegenüber der zweiten Walze (W₂) zur Einstellung eines Spaltes (S₁) ansteuerbar verfahren wird.

4. Verfahren nach wenigstens einem der Ansprüche 1 bis 3, **dadurch gekennzeichnet, dass** die zweite Walze (W₂) ortsfest in einem Gehäuse (8) drehbar und angetrieben gelagert wird und die Walze (W₂) mit Antriebseinheit zum Austauschen, Warten, Reinigen oder Reparieren aus einem Schlitz der Seitenwände (6) entnommen wird.

5. Verfahren nach wenigstens einem der Ansprüche 1 bis 4, **dadurch gekennzeichnet, dass** die dritte Walze (W₃) um eine exzentrische Drehachse (D) zur Veränderung ihrer Lage gegenüber der Walze (W₁) und/oder Walze (W₂) aktiv ansteuerbar bewegt wird, wobei die Drehachse (D) ausserhalb einer Mittelachse (M₃) der Walze (W₃) liegt.

6. Verfahren nach Anspruch 5, **dadurch gekennzeichnet, dass** die Walze (W₃) und ggf. ihr Antrieb auf einem Drehschild (7) gelagert sind, wobei das Drehschild (7) um die Drehachse (D) aktiv angetrieben und ansteuerbar verschwenkt wird.

7. Verfahren nach wenigstens einem der Ansprüche 1 bis 6, **dadurch gekennzeichnet, dass** die Walze (W₄) unterhalb der Walze (W₃) angeordnet ist und die Walze (W₄) gegenüber der Walze. (W₃) aktiv ansteuerbar auch im Betrieb verfahren wird.

8. Verfahren nach Anspruch 6 oder 7, **dadurch gekennzeichnet, dass** die Walze (W₄) im Drehschild (7) gelagert ist und innerhalb des Drehschildes (7) linear gegen die Walze (W₃) verfahren wird, um einem Spalt (S₃) zwischen Walze (W₃) und Walze (W₄), entkoppelt und unabhängig von der Lage des Drehschildes (7) bzw. der Lage der Walze (W₃) auch im Betrieb aktiv ansteuerbar zu verändern.

9. Verfahren nach wenigstens einem der Ansprüche 1 bis 8, **dadurch gekennzeichnet, dass** die Walzen (W₁ bis W₄) thermisch temperierbar und alle einzeln angetrieben werden, wobei die Antriebe in den Walzen (W₁ bis W₄) integriert sind, oder an diese anschliessen.

10. Verfahren nach wenigstens einem der Ansprüche 1 bis 9, **dadurch gekennzeichnet, dass** alle Walzen (W₁ bis W₄) baugleich ausgebildet sind und untereinander austauschbar sind.

11. Verfahren nach wenigstens einem der Ansprüche 6 bis 10, **dadurch gekennzeichnet, dass** das Drehschild (7) um die Drehachse (D) mittels eines Linearantriebes (4.2), insbesondere Hydraulikzylinder aktiv ansteuerbar auch im Betrieb verschwenkt wird, wobei der Linearantrieb (4.2) einerseits an einem Gehäuse (8), insbesondere an einer Seitenwand (6) des Gehäuses (8) abgestützt ist, und andernends am Drehschild (7) in einem grossen Hebelarm zur Drehachse (D) angreift, wobei zwischen den Angriffspunkt (9) und der Drehachse (D) die Walzen (W₃ und W₄) gelagert werden.

12. Verfahren nach wenigstens einem der Ansprüche 1 bis 11, **dadurch gekennzeichnet, dass** die Walze (W₄) gegenüber der Walze (W₃) linear verfahrbar ist, wobei eine Wirklinie (L₄) des Linearantriebes (4.3) der Walze (W₄) in etwa auf einen Mittelpunkt (M₃) der Walze (W₃) ausgerichtet wird.

13. Verfahren nach wenigstens einem der Ansprüche 1 bis 12, **dadurch gekennzeichnet, dass** eine Wirklinie (L₁) eines Linearantriebes (4.1) der Walze (W₁) auf eine Mittelachse (M₂) der Walze (W₂) ausgerichtet wird.

14. Verfahren nach wenigstens einem der Ansprüche 6 bis 13, **dadurch gekennzeichnet, dass** durch Verschwenken des Drehschildes (7), die Walze (W₃) gegenüber der Walze (W₂) bewegt wird und hierdurch ein Spalt (S₂) aktiv ansteuerbar verändert wird.

15. Verfahren nach wenigstens einem der Ansprüche 6 bis 14, **dadurch gekennzeichnet, dass** unabhängig von der Bewegung der Walze (W₃) durch Verschwenken des Drehschildes (7) um die Drehachse (D) ein Spalt (S₃) mittels des Linearantriebes (4.3) durch Bewegen der Walze (W₄) gegenüber der Walze (W₃) auch im Betrieb aktiv ansteuerbar verändert wird.

16. Vierwalzenglättwerk zum Vergleichmässigen einer Kunststoffschmelze (2) mit vier Walzen (W₁, W₂, W₃, W₄), wobei die Kunststoffschmelze (2) zwischen der ersten und der zweiten Walze (W₁, W₂) mittels eines Extrusionsdüse (1) vergleichmässigbar ist, **dadurch gekennzeichnet, dass** eine Lage der dritten Walze (W₃) zum Einstellen unterschiedlicher Betriebszustände, auch im Betrieb gegenüber den Walzen (W₁ und/oder W₂) veränderbar ist, wobei die Walzen (W₃ und W₄) über ein Drehschild (7) um eine exzentrische Drehachse (D) gemeinsam verschwenkbar gelagert sind.

17. Vierwalzenglättwerk nach Anspruch 16, **dadurch gekennzeichnet, dass** die Walzen (W₁ bis W₂) zwischen Seitenwänden (6) eines Gehäuses (8) gelagert sind, wobei ausserhalb der Seitenwände (6) die Antriebselemente der jeweiligen Walzen (W₁ bis W₄), bestehend aus Motor und/oder Getriebeeinheit daran anschliessen.

18. Vierwalzenglättwerk nach Anspruch 16 oder 17, **dadurch gekennzeichnet, dass** innerhalb der Seitenwände (6) ein jeweils um eine Drehachse (D) verschwenkbares Drehschild (7) eingesetzt ist, welche über zumindest einen Linearantrieb (4.2) um die Drehachse (D) verschwenkbar gelagert sind.

19. Vierwalzenglättwerk nach Anspruch 18, **dadurch gekennzeichnet, dass** zwischen den gegenüberliegenden Drehschildern (7) die Walzen (W₃ und W₄) verschwenkbar bzw. bewegbar um die Drehachse (D), angetrieben über den Linearantrieb (4.2) lageveränderbar sind.

20. Vierwalzenglättwerk nach Anspruch 18 oder 19, **dadurch gekennzeichnet, dass** die Walze (W₄) über einen weiteren Linearantrieb (4.3) zur aktiven Einstellung eines Spaltes (S₃) gegen die Walze (W₃) auch im Betrieb verfahrbar ist.

21. Vierwalzenglättwerk nach wenigstens einem der Ansprüche 18 bis 20, **dadurch gekennzeichnet, dass** die vierte Walze (W₄) über eine im Drehschild (7) integrierte Linearführung (5) linear mittels des zumindest einem Linearantriebes (4.3) gegen die Walze (W₃) auch im Betrieb bewegbar und verfahrbar ist.

22. Vierwalzenglättwerk nach wenigstens einem der Ansprüche 18 bis 21, **dadurch gekennzeichnet, dass** zur Einstellung eines Spaltes (S₂) zwischen Walze (W₂) und Walze (W₃) das Drehschild (7) mittels des Linearantriebes (4.2) um die Drehachse (D) bewegbar ist, und ein Spalt (S₃) Zwischen Walze (W₃ und W₄) konstant gehalten bleibt und lediglich durch den weiteren Linearantrieb (4.3) lediglich durch Bewegen der Walze (W₄) gegenüber der Walze (W₃) veränderbar ist.

23. Vierwalzenglättwerk nach wenigstens einem der Ansprüche 18 bis 22, **dadurch gekennzeichnet, dass** eine Wirklinie (L₄) des Linearantriebes (4.3) der Walze (W₄) in etwa auf die Mittelachse (M₃) der Walze (W₃) ausgerichtet ist.

24. Vierwalzenglättwerk nach wenigstens einem der Ansprüche 18 bis 23, **dadurch gekennzeichnet, dass** eine Wirklinie (L₁) eines Linearantriebes (4.1) der Walze (W₁) in etwa auf eine Mittelachse (M₂) der Walze (W₂) ausgerichtet ist.

25. Vierwalzenglättwerk nach wenigstens einem der Ansprüche 16 bis 24, **dadurch gekennzeichnet, dass** eine Veränderung des Spaltes (S₂) zwischen Walze (W₂) und Walze (W₃) unabhängig von einer Einstellung des Spaltes (S₃) zwischen Walze (W₃) und Walze (W₄) bzw. unabhängig von einer Einstellung des Spaltes (S₁) zwischen Walze (W₂) und Walze (W₁) durch Betätigen des Linerantriebes (4.2), insbesondere durch Verschwenken des Drehschildes (7) um die Drehachse (D) erfolgt.

26. Vierwalzenglättwerk nach wenigstens einem der Ansprüche 16 bis 25, **dadurch gekennzeichnet, dass** durch Verschwenken des Drehschildes (7) mittels des Linearantriebes (4.2) um die Drehachse (D) für eine Anfahrposition die Walze (W₃) unterhalb in etwa mittig zwischen die beiden Walzen (W₁ und W₂) verfahrbar ist, um die Kunststoffschmelze (2) aufzunehmen.

27. Vierwalzenglättwerk nach wenigstens einem der Ansprüche 16 bis 26, **dadurch gekennzeichnet, dass** die Walzen (W₁ bis W₄) mit entsprechenden Antrieben und anschliessenden Getriebeelementen baugleich ausgebildet sind und untereinander austauschbar sind.

28. Vierwalzenglättwerk nach wenigstens einem der Ansprüche 16 bis 27, **dadurch gekennzeichnet, dass** zur Aufnahme und Lagerung der Walze (W₂) in Seitenwänden (6) des Gehäuses (8) eine schlitzartige Ausnehmung gebildet ist.

## Claims

1. Method of operating a four-roller calender (R), wherein a molten mass of plastics material (2) from an extrusion nozzle (1) is distributed evenly between a first and a second roller (W₁, W₂) and then between a third and a fourth roller (W₃, W₄), **characterised in that** one position of the third roller (W₃) for setting different operational states, even during the operation, relative to the rollers (W₁ and/or W₂) is changed, the rollers (W₃ and W₄) being moved jointly, via a rotary plate (7), about an eccentric axis of rotation (D)

2. Method according to claim 1, **characterised in that**, for a starting process, the third roller (W₃) is displaced substantially centrally beneath the two first rollers (W₁ and W₂), in order to transfer the molten mass of plastics material (2) to the third roller (W₃).

3. Method according to claim 1 or 2, **characterised in that** the first roller (W₁) is displaced in an actuatable manner, via a drive, in an X direction relative to the second roller (W₂) to set a gap (S₂).

4. Method according to at least one of claims 1 to 3, **characterised in that** the second roller (W₂) is fixedly mounted in a housing (8) in a rotatable and driven manner, and the roller (W₂), with the driving unit, is removed from a slot in the lateral walls (6) for exchanging, servicing, cleaning or repairing purposes.

5. Method according to at least one of claims 1 to 4, **characterised in that** the third roller (W₃) is moved in an actively actuatable manner about an eccentric axis of rotation (D), to change its position relative to the roller (W₁) and/or the roller (W₂), the axis of rotation (D) lying externally of a central axis (M₃) of the roller (W₃).

6. Method according to claim 5, **characterised in that** the roller (W₃), and possibly its drive, are mounted on a rotary plate (7), the rotary plate (7) being pivoted in an actively driven and actuatable manner about the axis of rotation (D).

7. Method according to at least one of claims 1 to 6, **characterised in that** the roller (W₄) is disposed beneath the roller (W₃), and the roller (W₄) is displaced in an actively actuatable manner relative to the roller (W₃₎, even during the operation.

8. Method according to claim 6 or 7, **characterised in that** the roller (W₄) is mounted in the rotary plate (7), and is linearly displaced within the rotary plate (7) towards the roller (W₃), in order to change, in an actively actuatable manner, even during the operation, a gap (S₃) between roller (W₃) and roller (W₄), in an isolated manner and independently of the position of the rotary plate (7) or respectively of the position of the roller (W₃).

9. Method according to at least one of claims 1 to 8, **characterised in that** the rollers (W₁ to W₄) are all driven individually and can be thermally controlled, the drives being incorporated in the rollers (W₁ to W₄) or communicating therewith.

10. Method according to at least one of claims 1 to 9, **characterised in that** all of the rollers (W₁ to W₄) have identical constructions and are interchangeable.

11. Method according to at least one of claims 6 to 10, **characterised in that** the rotary plate (7) is pivoted in an actively actuatable manner, even during the operation, about the axis of rotation (D) by means of a linear drive (4.2), more especially an hydraulic cylinder, the linear drive (4.2) being supported at one side on a housing (8), more especially on a lateral wall (6) of the housing (8), and engaging at the other end with the rotary plate (7) in a large lever arm extending to the axis of rotation (D), the rollers (W₃ and W₄) being mounted between the point of engagement (9) and the axis of rotation (D).

12. Method according to at least one of claims 1 to 11, **characterised in that** the roller (W₄) is linearly displaceable relative to the roller (W₃), an active line (L₄) of the linear drive (4.3) of the roller (W₄₎ being orientated substantially towards a central point (M₃) of the roller (W₃).

13. Method according to at least one of claims 1 to 12, **characterised in that** an active line (L₁) of a linear drive (4.1) or the roller (W₁) is orientated towards a central axis (M₂) of the roller (W₂).

14. Method according to at least one of claims 6 to 13, **characterised in that**, by pivoting the rotary plate (7), the roller (W₃) is moved relative to the roller (W₂), and a gap (S₂) is hereby changed in an actively actuatable manner.

15. Method according to at least one of claims 6 to 14, **characterised in that**, independently of the movement of the roller (W₃), by pivoting the rotary plate (7) about the axis of rotation (D), a gap (S₃) is changed in an actively actuatable manner by means of the linear drive (4.3), by moving the roller (W₄) relative to the roller (W₃), even during the operation.

16. Four-roller calender for distributing evenly a molten mass of plastics material (2) by means of four rollers (W₁, W₂, W₃, W₄), the molten mass of plastics material (2) being able to be distributed evenly between the first and the second roller (W₁, W₂) by means of an extrusion nozzle (1), **characterised in that** one position of the third roller (W₃) for setting different operational states, even during the operation, relative to the rollers (W₁ and/or W₂) can be changed, the rollers (W₃ and W₄) being mounted so as to be jointly pivotable, via a rotary plate (7), about an eccentric axis of rotation (D).

17. Four-roller calender according to claim 16, **characterised in that** the rollers (W₁ to W₄) are mounted between lateral walls (6) of a housing (8), the driving elements of the respective rollers (W₁ to W₄), comprising a motor and/or transmission unit, communicating therewith externally of the lateral walls (6).

18. Four-roller calender according to claim 16 or 17, **characterised in that** a rotary plate (7), which is respectively pivotable about an axis of rotation (D), is inserted internally of the lateral walls (6), which are mounted via at least one linear drive (4.2) so as to be pivotable about the axis of rotation (D).

19. Four-roller calender according to claim 18, **characterised in that**, between the oppositely situated rotary plates (7), the rollers (W₃ and W4) are positionally variable, in a pivotable or respectively movable manner, about the axis of rotation (D) when driven via the linear drive (4.2).

20. Four-roller calender according to claim 18 or 19, **characterised in that** the roller (W₄) is displaceable towards the roller (W₃), even during the operation, via an additional linear drive (4.3), for the active setting of a gap (S₃).

21. Four-roller calender according to at least one of claims 18 to 20, **characterised in that** the fourth roller (W₄) is linearly movable and displaceable towards the roller (W₃), even during the operation, via a linear guide means (5) incorporated in the rotary plate (7), by means of the at least one linear drive (4.3).

22. Four-roller calender according to at least one of claims 18 to 21, **characterised in that**, for setting a gap (S₂) between roller (W₂) and roller (W₃), the rotary plate (7) is movable by means of the linear drive (4.2) about the axis of rotation (D), and a gap (S₃) between rollers (W₃ and W₄) remains constant and is only variable by the additional linear drive (4.3) solely by moving the roller (W₄) relative to the roller (W₃).

23. Four-roller calender according to at least one of claims 18 to 22, **characterised in that** an active line (L₄) of the linear drive (4.3) of the roller (W₄) is orientated substantially towards the central axis (M₃) of the roller (W₃).

24. Four-roller calender according to at least one of claims 18 to 23, **characterised in that** an active line (L₁) of a linear drive (4.1) of the roller (W₁) is orientated substantially towards a central axis (M₂) of the roller (W₂).

25. Four-roller calender according to at least one of claims 16 to 24, **characterised in that** an alteration in the gap (S₂) between roller (W₂) and roller (W₃), independently of a setting of the gap (S₃) between roller (W₃) and roller (W₄), or respectively independently of a setting of the gap (S₁) between roller (W₂) and roller (W₁), is effected by actuating the linear drive (4.2), more especially by pivoting the rotary plate (7) about the axis of rotation (D).

26. Four-roller calender according to at least one of claims 16 to 25, **characterised in that**, by pivoting the rotary plate (7) by means of the linear drive (4.2) about the axis of rotation (D), the roller (W₃) is displaceable substantially centrally between the two rollers (W₁ and W₂) for a starting position, in order to accommodate the molten mass of plastics material (2).

27. Four-roller calender according to at least one of claims 16 to 26, **characterised in that** the rollers (W₁ to W₄) have identical constructions with appropriate drives and subsequent transmission elements and are interchangeable.

28. Four-roller calender according to at least one of claims 16 to 27, **characterised in that** a slot-like recess is formed to accommodate and support the roller (W₂) in lateral walls (6) of the housing (8).

## Revendications

1. Procédé pour faire fonctionner une machine de polissage à quatre cylindres (R), dans lequel un matériau plastique en fusion (2) sortant d'une tuyère d'extrusion (1) est égalisé entre un premier et un deuxième cylindre (W₁, W₂) et ensuite entre un troisième et un quatrième cylindre (W₃, W₄),
**caractérisé par le fait**
**qu'**une position du troisième cylindre (W₃) est modifiée pour le réglage de conditions de fonctionnement différentes, également en fonctionnement, par rapport aux cylindres (W₁ et/ou W₃), les cylindres (W₃ et W₄) étant déplacés ensemble, par l'intermédiaire d'une plaque rotative (7), autour d'un axe de rotation excentrique (D).

2. Procédé selon la revendication 1, **caractérisé par le fait que**, pour un processus d'approche, le troisième cylindre (W₃) est déplacé environ au centre au-dessous des deux premiers cylindres (W₁ et W₂), pour transmettre le matériau plastique en fusion (2) au troisième cylindre (W₃).

3. Procédé selon la revendication 1 ou 2, **caractérisé par le fait que** le premier cylindre (W₁) est déplacé de manière commandable par l'intermédiaire d'un entraînement dans une direction X par rapport au deuxième cylindre (W₂) pour le réglage d'un interstice (S₁).

4. Procédé selon au moins l'une des revendications 1 à 3, **caractérisé par le fait que** le deuxième cylindre (W₂) est monté de manière rotative et entraînée stationnaire dans un boîtier (3) et que le cylindre (W₂) avec l'unité d'entraînement est sorti par une fente des parois latérales (6) pour l'échange, l'entretien, le nettoyage ou la réparation.

5. Procédé selon au moins l'une des revendications 1 à 4, **caractérisé par le fait que** le troisième cylindre (W₃) est déplacé de manière commandable activement autour d'un axe de rotation excentrique (D) pour modifier sa position par rapport au cylindre (W₂) et/ou au cylindre (W₂), l'axe de rotation (D) se trouvant en-dehors d'un axe médian (M₃) du cylindre (W₃).

6. Procédé selon la revendication 5, **caractérisé par le fait que** le cylindre (W₂) et éventuellement son entraînement sont montés sur une plaque rotative (7), la plaque rotative (7) étant pivotée de manière entraînée et commandable activement autour de l'axe de rotation (D).

7. Procédé selon au moins l'une des revendications 1 à 6, **caractérisé par le fait que** le cylindre (W₄) est disposé au-dessous du cylindre (W₃) et que le cylindre (W₄) est déplacé de manière commandable activement par rapport au cylindre (W₂), même en fonctionnement.

8. Procédé selon la revendication 6 ou 7, **caractérisé par le fait que** le cylindre (W₄) est monté dans la plaque rotative (7) et est déplacé dans la plaque rotative (7) de manière linéaire par rapport au cylindre (W₃), pour faire varier de manière commandable activement un interstice (S₁) entre le cylindre (W₃) et le cylindre (W₄), de manière découplée et indépendante de la position de la plaque rotative (7) ou de la position du cylindre (W₂), même en fonctionnement.

9. Procédé selon au moins l'une des revendications 1 à 8, **caractérisé par le fait que** les cylindres (W₁ à W₄) peuvent être thermostatisés et sont tous entraînés individuellement, les entraînements étant intégrés dans les cylindres (W₁ à W₄), ou venant se raccorder à ces derniers.

10. Procédé selon au moins l'une des revendications 1 à 9, **caractérisé par le fait que** tous les cylindres (W₁ à W₄) sont réalisés de construction identique et sont échangeables entre eux.

11. Procédé selon au moins l'une des revendications 6 à 10, **caractérisé par le fait que** la plaque rotative (7) est pivotée de manière commandable activement, même en fonctionnement, autour de l'axe de rotation (D) au moyen d'un entraînement linéaire (4.2), en particulier un cylindre hydraulique, l'entraînement linéaire (4.2) s'appuyant, d'une part, sur un boîtier (8), en particulier sur une paroi latérale (6) du boîtier (8), et s'attaquant, d'autre part, à la plaque de rotation (7), dans un grand bras de levier vers l'axe de rotation (D), entre le point d'attaque (9) et l'axe de rotation (D) étant montés les cylindres (W₃ et W₄).

12. Procédé selon au moins l'une des revendications 1 à 11, **caractérisé par le fait que** le cylindre (W₄) peut être déplacé linéairement par rapport au cylindre (W₃), une ligne d'action (L₄) de l'entraînement linéaire (4.3) du cylindre (W₄) étant orientée environ sur un point central (M₃) du cylindre (W₃).

13. Procédé selon au moins l'une des revendications 1 à 12, **caractérisé par le fait qu'**une ligne d'action (L₁) d'un entraînement linéaire (4.1) du cylindre (W₁) est orientée sur un axe médian (M₂) du cylindre (W₂).

14. Procédé selon au moins l'une des revendications 6 à 13, **caractérisé par le fait que**, par le pivotement de la plaque de rotation (7), le cylindre (W₃) est déplacé par rapport au cylindre (W₂) et que, de ce fait, un interstice (S₂) est modifié de manière commandable activement.

15. Procédé selon au moins l'une des revendications 6 à 14, **caractérisé par le fait que**, indépendamment du déplacement du cylindre (W₂) par le pivotement de la plaque rotative (7) autour de l'axe de rotation (D), un interstice (S₂) est modifié de manière commandable activement au moyen de l'entraînement linéaire (4.3) en déplaçant le cylindre (W₄) par rapport au cylindre (W₃), même en fonctionnement.

16. Machine de polissage à quatre cylindres pour égaliser un matériau plastique en fusion (2), avec quatre cylindres (W₁, W₂, W₃, W₄), le matériau plastique en fusion (2) pouvant être égalisé entre le premier et le deuxième cylindre (W₁, W₂) au moyen d'une tuyère d'extrusion (1), **caractérisée par le fait qu'**une position du troisième cylindre (W₃) peut être modifiée pour le réglage de conditions de fonctionnement différents, même en fonctionnement, par rapport aux cylindres (W₁ et/ou W₂), les ctylindres (W₃ et W₄) étant montés de manière pivotable ensemble, par l'intermédiaire d'une plaque rotative (7), autour d'un axe de rotation excentrique (D).

17. Machine de polissage à quatre cylindres selon la revendication 16, **caractérisée par le fait que** les cylindres (W₁ à W₄) sont montés entre des parois latérales (6) d'un boîtier (8), à l'extérieur des parois latérales (6) venant se raccorder les éléments d'entraînement des cylindres respectifs (W₂ à W₄) composés d'un moteur et/ou d'une unité d'engrenages.

18. Machine de polissage à quatre cylindres selon la revendication 16 ou 17, **caractérisée par le fait qu'**à l'intérieur des parois latérales (6) est placée une plaque rotative (7), chaque fois pivotable autour d'un axe de rotation (D), lesquelles sont montées de manière pivotable par l'intermédiaire d'un entraînement linéaire (4.2) autour de l'axe de rotation (D).

19. Machine de polissage à quatre cylindres selon la revendication 18, **caractérisée par le fait que**, entre les plaques rotatives (7) opposées, les cylindres (W₃ et W₄) sont variables en position de manière pivotable ou déplaçable autour de l'axe de rotation (D), de manière entraînée par l'intermédiaire de l'entraînement linéaire (4.2).

20. Machine de polissage à quatre cylindres selon la revendication 18 ou 19, **caractérisée par le fait que** le cylindre (W₄) est déplaçable par l'intermédiaire d'un autre entraînement linéaire (4.3) pour le réglage actif d'un interstice (S₃) par rapport au cylindre (W₃), même en fonctionnement.

21. Machine de polissage à quatre cylindres selon au moins l'une des revendications 18 à 20, **caractérisée par le fait que** le quatrième cylindre (W₄) est mobile et déplaçable linéairement par l'intermédiaire d'un guide linéaire (5) intégré dans la plaque rotative (7) au moyen de l'au moins un entraînement linéaire (4.3) par rapport au cylindre (W₃), même en fonctionnement.

22. Machine de polissage à quatre cylindres selon au moins l'une des revendications 18 à 21, **caractérisée par le fait que**, pour le réglage d'un interstice (S₂) entre le cylindre (W₂) et le cylindre (W₃), la plaque rotative (7) est déplaçable, au moyen de l'entraînement linéaire (4.2) autour de l'axe de rotation (D), et qu'un interstice (S₂) entre le cylindre (W₃ et W₄) est maintenu constant et ne peut être modifié que par l'autre entraînement linéaire (4.3), uniquement par déplacement du cylindre (W₄) par rapport au cylindre (W₃).

23. Machine de polissage à quatre cylindres selon au moins l'une des revendications 18 à 22, **caractérisée par le fait qu'**une ligne d'action (L₄) de l'entraînement linéaire (4.3) du cylindre (W₄) est orientée environ sur l'axe médian (M₃) du cylindre (W₃).

24. Machine de polissage à quatre cylindres selon au moins l'une des revendications 18 à 23, **caractérisée par le fait qu'**une ligne d'action (L₁) d'un entraînement linéaire (4.1) du cylindre (W₂) est orientée environ sur un axe médian (M₂) du cylindre (W₂).

25. Machine de polissage à quatre cylindres selon au moins l'une des revendications 16 à 24, **caractérisée par le fait qu'**une variation de l'interstice (S₂) entre le cylindre (W₂) et le cylindre (W₃) a lieu indépendamment d'un réglage de l'interstice (S₂) entre le cylindre (W₃) et le cylindre (W₄) ou indépendamment d'un réglage de l'interstice (S₁) entre le cylindre (W₂) et le cylindre (W₁) en actionnant l'entraînement linéaire (4.2), en particulier en faisant pivoter la plaque rotative (7) autour de l'axe de rotation (D).

26. Machine de polissage à quatre cylindres selon au moins l'une des revendications 16 à 25, **caractérisée par le fait que** par le pivotement de la plaque rotative (7) au moyen de l'entraînement linéaire (4.2) autour de l'axe de rotation (D), le cylindre (W₃) peut, pour une position d'attaque, être déplacé au-dessous, environ au centre entre les deux cylindres (W₁ et W₂), pour recevoir le matériau plastique en fusion (2).

27. Machine de polissage à quatre cylindres selon au moins l'une des revendications 16 à 26, **caractérisée par le fait que** les cylindres (W₁ à W₄) à entraînements correspondants et éléments d'engrenages y raccordés sont réalisés de construction identique et sont échangeables entre eux.

28. Machine de polissage à quatre cylindres selon au moins l'une des revendications 16 à 27, **caractérisée par le fait qu'**il est formé, pour la réception et le montage du cylindre (W₂) dans des parois latérales (6) du boîtier (8), un évidement en forme de fente.
